# EUROPEAN PATENT APPLICATION

(11) **EP 4 086 756 A1**
(43) Date of publication of application: **09.11.2022**
(21) Application number: 20909110.7
(22) Date of filing: 18.12.2020
(51) Int. Cl.: G06F 8/65

(54) **METHOD AND APPARATUS FOR PROCESSING VIRTUAL MACHINE COMPONENT**

(30) Priority: 31.12.2019 CN 201911419726
(71) Applicant: ZTE Corporation, Shenzhen, Guangdong 518057 (CN)
(72) Inventor: MIAO, Xingxing, Shenzhen, Guangdong 518057 (CN)
(74) Representative: Deambrogi, Edgardo
(86) International application number: PCT/CN2020/137772
(87) International publication number: WO 2021/135995

(57) **Abstract**

A method and apparatus for processing a virtual machine component. The method for processing the virtual machine component includes: sending a virtual machine component processing file to a virtual machine via a virtual serial port, wherein the virtual serial port is established by a virtual machine management Hyper Agent (HA) module (S102); and sending processing instruction information to the virtual machine via the virtual serial port, so as to instruct the virtual machine to process the virtual machine component processing file (S104).

## Description

### Technical Field

The present disclosure relates to the field of communications, specifically to a method and apparatus for processing a virtual machine component.

### Background

In a virtualization platform, the management for a virtual machine needs to be implemented by deploying software in the virtual machine, and the above software is referred to as a virtual machine component of the virtualization platform. In the related art, during installation of the virtual machine component, a virtual optical disk drive needs to be mounted on the virtual machine, so as to read an ISO file saved on a host machine through the optical disk drive and then monitor the inside of the virtual machine; and a component packet is manually installed.

In addition, due to an upgrading requirement of a virtual machine component, an existing component in the virtual machine can achieve automatic upgrading in the prior art, but similar to the above installation flow, it needs to be ensured that a virtual optical disk drive has been mounted on the virtual machine during upgrading of the virtual machine component. At present, the virtual optical disk drive can only be of an Integrated Development Environment (IDE) bus type, and online mounting cannot be achieved due to the limitations of characteristics of the IDE itself. Therefore, for a virtual machine that is not mounted with a virtual optical disk drive, it is necessary to manually add a virtual optical disk drive and mount an ISO file to be upgraded after the virtual machine is powered off; and upgrade is then performed after the virtual machine is powered on. In some scenarios, powering off the virtual machine is unacceptable to users. Furthermore, the above-mentioned virtual machine component upgrade process relies too much on an original old version component in the virtual machine. If the component itself runs abnormally, the upgrade will fail. Therefore, the installation, deployment or upgrade operation flow of a virtual machine component in the related art is time-consuming and labor-intensive, and there is a certain probability of failure.

In addition, in the related art, the installation or upgrade processing for a virtual machine component is implemented through a business network inside a virtual machine, that is, the virtual machine component is transmitted into the virtual machine through the business network, and is then installed, deployed or upgraded in a way similar to the above-mentioned virtual optical disk drive-based flow. However, in the above-mentioned flow, one network needs to be established to be connected to the business network of the virtual machine. The ISO file has been deployed in this network, so that the safety of the implementation process cannot be guaranteed, and the network bandwidth of a user will be occupied.

In the above-mentioned related art, the virtual machine component cannot implement efficient and secure installation, deployment or upgrade processing, and there is no effective solution proposed in the related art.

### Summary

Embodiments of the present disclosure provide a method and apparatus for processing a virtual machine component, so as to at least solve the problem that a virtual machine component in the related art cannot be efficiently and securely installed, deployed or upgraded.

According to one embodiment of the present disclosure, a method for processing a virtual machine component is provided, which is applied to a host agent. The method includes: sending a virtual machine component processing file to a virtual machine via a virtual serial port, wherein the virtual serial port is established by a virtual machine management Hyper Agent (HA) module; and sending processing instruction information to the virtual machine via the virtual serial port, so as to instruct the virtual machine to process the virtual machine component processing file.

According to another embodiment of the present disclosure, a method for processing a virtual machine component is further provided, which is applied to a virtual machine. The method includes: receiving a virtual machine component processing file sent by a host agent via a virtual serial port, wherein the virtual serial port is established by a virtual machine management HA module; and receiving processing instruction information sent by the host agent via the virtual serial port, and processing the virtual machine component processing file according to the processing instruction information.

According to another embodiment of the present disclosure, an apparatus for processing a virtual machine component is further provided, which is applied to a host agent. The apparatus includes: a first sending module configured for sending a virtual machine component processing file to a virtual machine via a virtual serial port, wherein the virtual serial port is established by a virtual machine management HA module; and a second sending module configured for sending processing instruction information to the virtual machine via the virtual serial port, so as to instruct the virtual machine to process the virtual machine component processing file.

According to another embodiment of the present disclosure, an apparatus for processing a virtual machine component is further provided, which is applied to a virtual machine. The apparatus includes: a fist receiving module configured for receiving a virtual machine component processing file sent by a host agent via a virtual serial port, wherein the virtual serial port is established by a virtual machine management HA module; and a second receiving module configured for receiving processing instruction information sent by the host agent via the virtual serial port, and processing the virtual machine component processing file according to the processing instruction information.

According to another embodiment of the present disclosure, a computer-readable storage medium is further provided. The computer-readable storage medium stores a computer program. The computer program is configured for, when running, implementing the operations in any of the above method embodiments.

According to another embodiment of the present disclosure, an electronic apparatus is further provided, including a memory and a processor. The memory stores a computer program. The processor is configured for, when running the computer program, implementing the operations in any of the above method embodiments.

### Brief Description of the Drawings

Drawings described herein are used for providing further understandings of the present disclosure, and constitute one part of this application. Illustrative embodiments and descriptions thereof of the present disclosure are used for explaining the present disclosure, and do not constitute an improper limitation to the present disclosure. In the drawings:
Fig. 1 is a flow chart (I) of a method for processing a virtual machine component provided according to an embodiment of the present disclosure;
Fig. 2 is a schematic architecture diagram of a management platform provided according to a specific embodiment of the present disclosure;
Fig. 3 is a work flow chart (I) of a method for processing a virtual machine component provided according to a specific embodiment of the present disclosure;
Fig. 4 is a work flow chart (II) of a method for processing a virtual machine component provided according to a specific embodiment of the present disclosure;
Fig. 5 is a work flow chart (II) of a method for processing a virtual machine component provided according to a specific embodiment of the present disclosure;
Fig. 6 is a work flow chart (II) of a method for processing a virtual machine component provided according to a specific embodiment of the present disclosure;
Fig. 7 is a flow chart (II) of a method for processing a virtual machine component provided according to an embodiment of the present disclosure;
Fig. 8 is a structural block diagram (I) of an apparatus for processing a virtual machine component provided according to an embodiment of the present disclosure;
Fig. 9 is a structural block diagram (II) of an apparatus for processing a virtual machine component provided according to an embodiment of the present disclosure.

### Detailed Description of the Embodiments

The present disclosure will be described in detail below with reference to the accompanying drawings and in combination with embodiments. It should be noted that the embodiments of this application and features in the embodiments may be combined with each other without conflicts.

It should be noted that the terms "first", "second", etc. in the specification and claims of the present disclosure and the above drawings are used to distinguish similar objects, and do not have to be used to describe a specific order or sequence.

### Embodiment 1

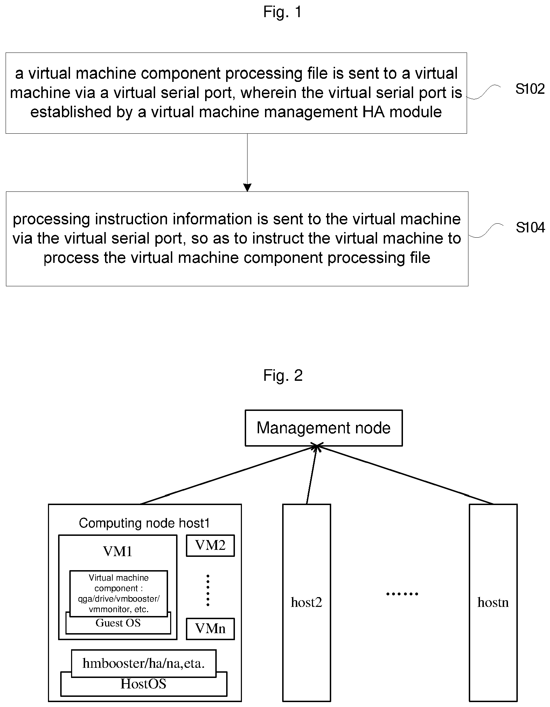

This embodiment provides a method for processing a virtual machine component, which is applied to a host agent. Fig. 1 is a flow chart (I) of a method for processing a virtual machine component provided according to an embodiment of the present disclosure. As shown in Fig. 1, the method for processing a virtual machine component in this embodiment includes:
In S102, a virtual machine component processing file is sent to a virtual machine via a virtual serial port, wherein the virtual serial port is established by a virtual machine management HA module.

In S104, processing instruction information is sent to the virtual machine via the virtual serial port, so as to instruct the virtual machine to process the virtual machine component processing file.

According to the method for processing a virtual machine component in this embodiment, a host agent may send a virtual machine component processing file to a virtual machine via a virtual serial port, and send processing instruction information to the virtual machine via the virtual serial port, so as to instruct the virtual machine to process the virtual machine component processing file. Therefore, the method for processing a virtual machine component in this embodiment can solve the problem that a virtual machine component cannot be efficiently and securely installed, deployed or upgraded in the related art, thus achieving an effect of efficiently and securely installing and upgrading the virtual machine component in the virtual machine.

Specifically, in the implementation process of the method for processing a virtual machine component in this embodiment, on the one hand, it does not matter whether there is a virtual optical disk drive in the virtual machine, and the installation or upgrade of the virtual machine component can be completed when no virtual optical disk drive is mounted in the virtual machine, so that the processing efficiency of the virtual machine component is improved, and the requirement for powering off the virtual machine caused by re-mounting of the virtual optical disk drive is avoided. On the other hand, the method for processing a virtual machine component in this embodiment is not limited by a running state of the virtual machine component in the upgrading process of the virtual machine, so that the upgrade of the virtual machine component can still be completed when the virtual machine component runs abnormally. Therefore, by the method for processing a virtual machine component in this embodiment, the efficiency in the virtual machine component processing process can be effectively improved, and the running cost is obviously reduced.

In one optional embodiment, the above-mentioned virtual machine component processing file includes at least one of:
a virtual machine component installation file, which is used for installing and deploying the virtual machine component in the virtual machine; and
a virtual machine component upgrade file, which is used for upgrading the virtual machine component in the virtual machine.

In one optional embodiment, in a case where the virtual machine component processing file is the virtual machine component installation file, the processing instruction information is used for instructing the virtual machine to run the virtual machine component installation file, so as to install and deploy the virtual machine component in the virtual machine.

In a case where the virtual machine component processing file is the virtual machine component upgrade file, the processing instruction information is used for instructing the virtual machine to run the virtual machine component upgrade file, so as to upgrade the virtual machine component in the virtual machine.

In one optional embodiment, before the above-mentioned operation that a virtual machine component processing file is sent to the virtual machine via the virtual serial port, the method further includes:
a processing request sent by a user is acquired, wherein the processing request contains virtual machine component identification information, and the virtual machine component identification information is used for identifying the virtual machine component.

In one optional embodiment, the above-mentioned request information further contains restart instruction information, wherein the restart instruction information is used for instructing the virtual machine to restart a virtual machine system after completing processing of the virtual machine component processing file.

In one optional embodiment, the method for processing a virtual machine component in this embodiment further includes:
whether the virtual machine system is started normally is detected, and whether a virtual machine agent runs normally is detected.

In one optional embodiment, before the above-mentioned operation that the virtual machine component processing file is sent to the virtual machine via the virtual serial port, the method further includes:
an occupied space of the virtual machine component processing file is determined,
wherein in a case where the occupied space of the virtual machine component processing file is less than or equal to a preset threshold, the following operations are executed: sending the virtual machine component processing file to the virtual machine via the virtual serial port, and sending the processing instruction information to the virtual machine via the virtual serial port.

It should be further noted that in a case where the occupied space of the above-mentioned virtual machine component processing file is greater than the preset threshold, and there is a virtual optical disk drive in the virtual machine, the virtual optical disk drive can be used to mount the virtual machine component processing file to complete the processing of the virtual machine component.

In one optional embodiment, before the above-mentioned operation that the virtual machine component processing file is sent to the virtual machine via the virtual serial port, the method further includes:
whether there is a virtual optical disk drive in the virtual machine is detected,
wherein in a case where there is no virtual optical disk drive in the virtual machine, the following operations are executed: sending the virtual machine component processing file to the virtual machine via the virtual serial port, and sending the processing instruction information to the virtual machine via the virtual serial port; or,
wherein in a case where there is a virtual optical disk drive in the virtual machine, the following operations are executed: sending the virtual machine component processing file to the virtual optical disk drive via the HA module, and sending the processing instruction information to the virtual machine via the virtual serial port.

In order to further describe the method for processing a virtual machine component in this embodiment, the working manner of the method for processing a virtual machine component in this embodiment is described below via specific embodiments. Fig. 2 is a schematic architecture diagram of a management platform provided according to a specific embodiment of the present disclosure. In the management platform as shown in FIG. 2, hots1 to hostn are hosts from 1 to n, and host1 is taken as an example, which may include VM1 to VMn, that is virtual machines from 1 to n. A host agent hmbooster module, a HA module, a Na module, and the like are also arranged in the host, and a virtual machine agent vmbooster module, a vmmonitor module, a Qemu Guest Agent) (qga) module, a virtio drive, and the like are also arranged in the virtual machine. The host and the virtual machine communicate with each other and perform mutual running management through the above modules. The processing of the virtual machine component in the following specific embodiments is implemented on the basis of the management platform shown in FIG. 2.

### Specific embodiment 1

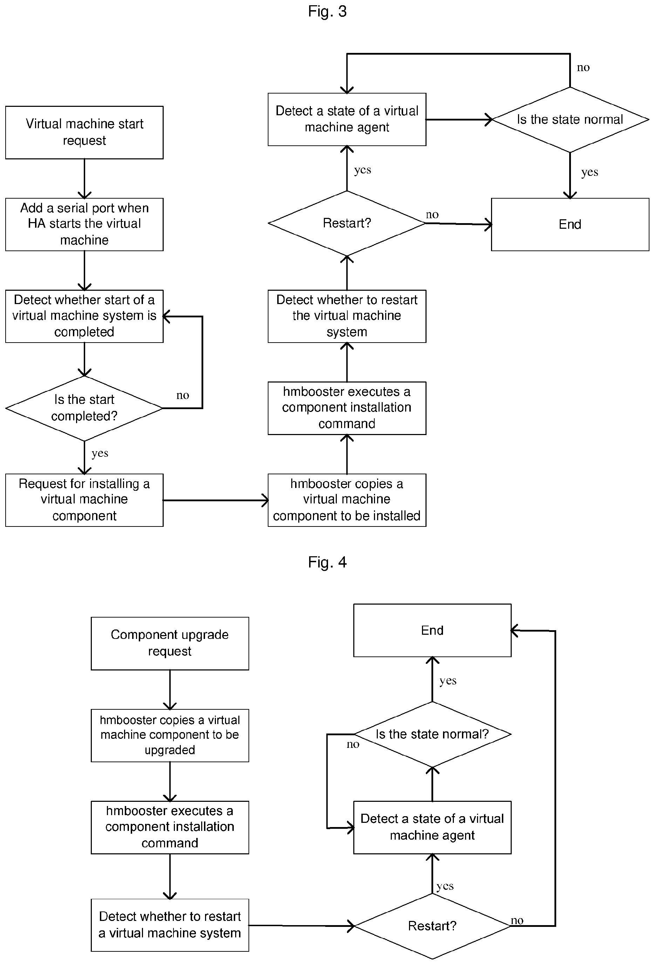

This specific embodiment describes an installation operation for a virtual machine component. Fig. 3 is a work flow chart (I) of a method for processing a virtual machine component provided according to a specific embodiment of the present disclosure. As shown in Fig. 3, specific operations of the installation operation for a virtual machine component in this specific embodiment are as follows:
In S1, a virtual machine is started to ensure that an operating system of the virtual machine has run normally.

In S2, a virtual machine component is asked to be installed, and a host agent finds a corresponding software packet according to a requested component version number and copies the software packet to a particular catalog inside the virtual machine via a virtual machine serial port.

In S3, after the copying is completed, the host agent sends, via the serial port, a command for installing the virtual machine component.

In S4, whether restart is needed is determined according to whether to allow to restart the virtual machine in the request and the type of the system GuestOS of the virtual machine, and if restart is not needed, the flow directly ends.

In S5, if the virtual machine is restarted, the host agent needs to continuously detect whether GuestOS is started normally and whether a virtual machine agent runs normally.

### Specific embodiment 2

This specific embodiment describes an upgrade operation for a virtual machine component. Fig. 4 is a work flow chart (II) of a method for processing a virtual machine component provided according to a specific embodiment of the present disclosure. As shown in Fig. 4, specific operations of the upgrade operation for a virtual machine component in this specific embodiment are as follows:
In S1, after a request for upgrading a virtual machine component is received, a host agent finds a corresponding software packet according to a requested component version number and copies the software packet to a particular catalog inside the virtual machine via a virtual machine serial port.

In S2, after the copying is completed, the host agent sends, via the serial port, a command for upgrading the virtual machine component.

In S3, whether restart is needed is determined according to whether to allow to restart the virtual machine in the request and the type of GuestOS, and if restart is not needed, the flow directly ends.

In S4, if the virtual machine is restarted, the host agent needs to continuously detect whether GuestOS is started normally and whether a virtual machine agent runs normally. After it is detected that the start and the running are normal, the upgrade flow ends.

### Specific embodiment 3

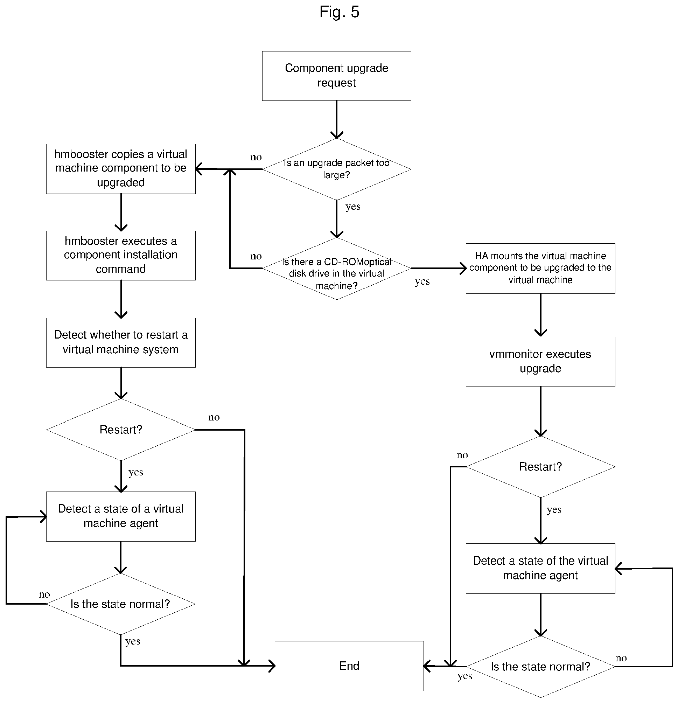

This specific embodiment describes an upgrade operation for a virtual machine component. In this specific embodiment, processing manners are distinguished according to an occupied space of a virtual machine component processing file, i.e., a file size, so as to use corresponding preferable manners to upgrade virtual machine component processing files with different file sizes. Fig. 5 is a work flow chart (III) of a method for processing a virtual machine component provided according to a specific embodiment of the present disclosure. As shown in Fig. 5, specific operations of the upgrade operation for the virtual machine component in this specific embodiment are as follows:
In S1, after a request for upgrading a virtual machine component is received, a management system first finds a corresponding upgrade packet, then determines whether the size of the upgrade packet exceeds a threshold, determines whether the virtual machine has a optical disk drive, and determines a running state of a virtual machine agent of an old version. If the size of the packet exceeds the threshold, and the state of the original virtual machine agent is normal, the original upgrade manner is performed, and S6 is executed, or S2 is executed.

In S2, a host agent finds a corresponding software packet according to a requested component version number and copies the software packet to a particular catalog inside the virtual machine via a virtual machine serial port.

In S3, after the copying is completed, the host agent sends, via the serial port, a command for upgrading the virtual machine component.

In S4, whether restart is needed is determined according to whether to allow to restart the virtual machine in the request and the type of GuestOS, and if restart is not needed, the flow directly ends.

In S5, if the virtual machine is restarted, the host agent needs to continuously detect whether GuestOS is started normally and whether a virtual machine agent runs normally; and after it is detected that the start and the running are normal, the upgrade flow ends.

In S6, the HA module adds the virtual machine component to be upgraded into the virtual optical disk drive.

In S7, the host agent informs the virtual machine agent to perform the upgrade operation; and after the upgrade is completed, the host agent is informed.

In S8, whether restart is needed is determined according to whether to allow to restart the virtual machine in the request and the type of GuestOS, and if restart is not needed, the flow directly ends.

In S9, if the virtual machine is restarted, the host agent needs to continuously detect whether GuestOS is started normally and whether a virtual machine agent runs normally. After it is detected that the start and the running are normal, the upgrade flow ends.

### Specific embodiment 4

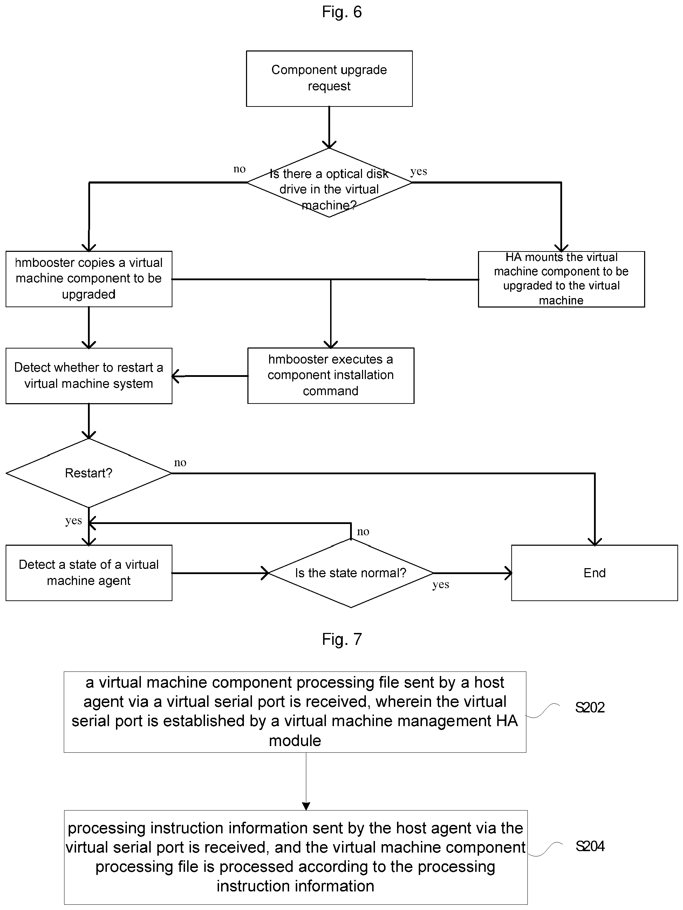

This specific embodiment describes an upgrade operation for a virtual machine component. In this specific embodiment, the upgrade operation for a virtual machine component in the above specific embodiment 3 is further optimized. Specifically, the upgrade operation for a virtual machine component is directly achieved according to a HA module and/or a virtual optical disk drive. Fig. 6 is a work flow chart (IV) of a method for processing a virtual machine component provided according to a specific embodiment of the present disclosure. As shown in Fig. 6, specific operations of the upgrade operation for the virtual machine component in this specific embodiment are as follows:
In S1, after a request for upgrading a virtual machine component, whether a virtual machine has a virtual optical disk drive is directly determined; if there is a optical disk drive, S2 is executed, or S3 is executed.

In S2, the HA module adds the virtual machine component to be upgraded into the virtual optical disk drive.

In S3, a host agent finds a corresponding software packet according to a requested component version number and copies the software packet to a particular catalog inside the virtual machine via a virtual machine serial port.

In S4, the host agent sends, via the serial port, a command for upgrading the virtual machine component.

In S5, whether restart is needed is determined according to whether to allow to restart the virtual machine in the request and the type of GuestOS, and if restart is not needed, the flow directly ends.

In S6, if the virtual machine is restarted, the host agent needs to continuously detect whether GuestOS is started normally and whether a virtual machine agent runs normally. After it is detected that the start and the running are normal, the upgrade flow ends.

Through the description of the above implementations, those skilled in the art can clearly understand that the method according to the above embodiment can be implemented via software and necessary general hardware platforms, of course, it can also be implemented by hardware, but in many cases, the former is better. Based on this understanding, the technical solution of the present disclosure essentially or the part that contributes to the existing technology can be embodied in the form of a software product, and the computer software product is stored in one storage medium (such as a read-only memory (ROM)/a random access memory (RAM), a magnetic disk, and an optical disk) and includes several instructions to enable a terminal device (which can be a mobile phone, a computer, a server, or a network device, etc.) to execute the methods described in the various embodiments of the present disclosure.

### Embodiment 2

This embodiment provides a method for processing a virtual machine component, which is applied to a virtual machine. Fig. 7 is a flow chart (II) of a method for processing a virtual machine component provided according to an embodiment of the present disclosure. As shown in Fig. 7, the method for processing a virtual machine component in this embodiment includes:
In S202, a virtual machine component processing file sent by a host agent via a virtual serial port is received, wherein the virtual serial port is established by a virtual machine management HA module.

In S204, processing instruction information sent by the host agent via the virtual serial port is received, and the virtual machine component processing file is processed according to the processing instruction information.

It should be further noted that other optional embodiments and technical effects of the method for processing a virtual machine component in this embodiment all correspond to those of the method for processing a virtual machine component in Embodiment 1, so descriptions thereof are omitted here.

In one optional embodiment, the above-mentioned virtual machine component processing file includes at least one of the following:
a virtual machine component installation file, which is used for installing and deploying the virtual machine component in the virtual machine; and
a virtual machine component upgrade file, which is used for upgrading the virtual machine component in the virtual machine.

In one optional embodiment, in a case where the virtual machine component processing file contains the virtual machine component installation file, the operation that the virtual machine component processing file is processed according to the processing instruction information includes:
the virtual machine component installation file is run to install and deploy the virtual machine component;
in a case where the virtual machine component processing file contains the virtual machine component upgrade file, the operation that the virtual machine component processing file is processed according to the processing instruction information includes:
   the virtual machine component upgrade file is run to upgrade the virtual machine component.

In one optional embodiment, before the above-mentioned operation that the virtual machine component processing file sent by the host agent via the virtual serial port is received, the method further includes:
an occupied space of the virtual machine component processing file is determined,
wherein in a case where the occupied space of the virtual machine component processing file is less than or equal to a preset threshold, the following operations are executed: receiving the virtual machine component processing file sent by the host agent via the virtual serial port, and receiving the processing instruction information sent by the host agent via the virtual serial port, so as to process the virtual machine component processing file according to the processing instruction information.

In one optional embodiment, the method for processing a virtual machine component in this embodiment further includes:
in a case where there is no virtual optical disk drive in the virtual machine, the following operations are executed: receiving the virtual machine component processing file sent by the host agent via the virtual serial port, and receiving the processing instruction information sent by the host agent via the virtual serial port, so as to process the virtual machine component processing file according to the processing instruction information; or,
in a case where there is a virtual optical disk drive in the virtual machine, the following operations are executed: receiving the virtual machine component processing file sent by the HA module via the virtual optical disk drive, and receiving the processing instruction information sent by the host agent via the virtual serial port, so as to process the virtual machine component processing file according to the processing instruction information.

Through the description of the above implementations, those skilled in the art can clearly understand that the method according to the above embodiment can be implemented via software and necessary general hardware platforms, of course, it can also be implemented by hardware, but in many cases, the former is better. Based on this understanding, the technical solution of the present disclosure essentially or the part that contributes to the existing technology can be embodied in the form of a software product, and the computer software product is stored in one storage medium (such as a read-only memory (ROM)/a random access memory (RAM), a magnetic disk, and an optical disk) and includes several instructions to enable a terminal device (which can be a mobile phone, a computer, a server, or a network device, etc.) to execute the methods described in the various embodiments of the present disclosure.

### Embodiment 3

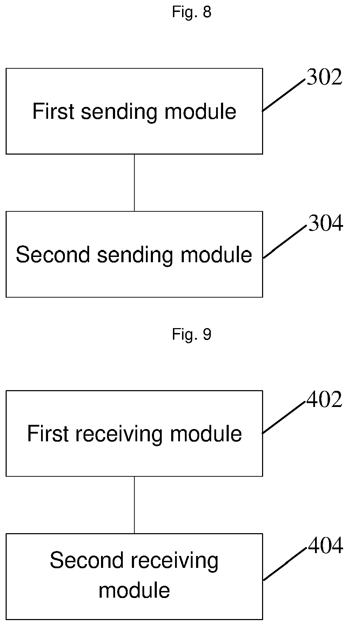

This embodiment provides an apparatus for processing a virtual machine component, which is applied to a host agent. The apparatus is configured for implementing the above embodiments and preferred implementations. What has been described will not be repeated. As used below, the term "module" can implement a combination of software and/or hardware with predetermined functions. Although the apparatuses described in the following embodiments are preferably implemented by software, implementation by hardware or a combination of software and hardware is also possible and conceived. Fig. 8 is a structural block diagram (I) of an apparatus for processing a virtual machine component provided according to an embodiment of the present disclosure. As shown in Fig. 8, the apparatus for processing a virtual machine component in this embodiment includes:
a first sending module 302 configured for sending a virtual machine component processing file to a virtual machine via a virtual serial port, wherein the virtual serial port is established by a virtual machine management HA module; and
a second sending module 304 configured for sending processing instruction information to the virtual machine via the virtual serial port, so as to instruct the virtual machine to process the virtual machine component processing file.

It should be further noted that other optional embodiments and technical effects of the apparatus for processing a virtual machine component in this embodiment all correspond to those of the method for processing a virtual machine component in Embodiment 1, so descriptions thereof are omitted here.

In one optional embodiment, the above-mentioned virtual machine component processing file includes at least one of:
a virtual machine component installation file, which is used for installing and deploying the virtual machine component in the virtual machine; and
a virtual machine component upgrade file, which is used for upgrading the virtual machine component in the virtual machine.

In one optional embodiment, in a case where the virtual machine component processing file is the virtual machine component installation file, the processing instruction information is used for instructing the virtual machine to run the virtual machine component installation file, so as to install and deploy the virtual machine component in the virtual machine.

In a case where the virtual machine component processing file is the virtual machine component upgrade file, the processing instruction information is used for instructing the virtual machine to run the virtual machine component upgrade file, so as to upgrade the virtual machine component in the virtual machine.

In one optional embodiment, before the operation of sending the virtual machine component processing file to the virtual machine via the virtual serial port, the apparatus further includes the following operation:
acquiring a processing request sent by a user, wherein the processing request contains virtual machine component identification information, and the virtual machine component identification information is used for identifying the virtual machine component.

In one optional embodiment, the above-mentioned request information further contains restart instruction information, wherein the restart instruction information is used for instructing the virtual machine to restart a virtual machine system after completing processing of the virtual machine component processing file.

In one optional embodiment, the apparatus for processing a virtual machine component in this embodiment is further configured for:
detecting whether the virtual machine system is started normally, and detecting whether a virtual machine agent runs normally.

In one optional embodiment, before the operation of sending the virtual machine component processing file to the virtual machine via the virtual serial port, the apparatus further includes the following operation:
determining an occupied space of the virtual machine component processing file,
wherein in a case where the occupied space of the virtual machine component processing file is less than or equal to a preset threshold, the following operations are executed: sending the virtual machine component processing file to the virtual machine via the virtual serial port, and sending the processing instruction information to the virtual machine via the virtual serial port.

In one optional embodiment, before the above-mentioned operation of sending the virtual machine component processing file to the virtual machine via the virtual serial port, the apparatus further includes the following operation:
detecting whether there is a virtual optical disk drive in the virtual machine,
wherein in a case where there is no virtual optical disk drive in the virtual machine, the following operations are executed: sending the virtual machine component processing file to the virtual machine via the virtual serial port, and sending the processing instruction information to the virtual machine via the virtual serial port; or,
wherein in a case where there is a virtual optical disk drive in the virtual machine, the following operations are executed: sending the virtual machine component processing file to the virtual optical disk drive via a HA module, and sending the processing instruction information to the virtual machine via the virtual serial port.

It should be noted that all the above modules can be implemented by software or hardware. For the latter, they can be implemented by the following methods, but are not limited to this. The above-mentioned modules are all located in a same processor, or all the above-mentioned modules are respectively located in different processors in any combination form.

### Embodiment 4

This embodiment provides an apparatus for processing a virtual machine component, which is applied to a virtual machine. The apparatus is configured for implementing the above embodiments and preferred implementations. What has been described will not be repeated. As used below, the term "module" can implement a combination of software and/or hardware with predetermined functions. Although the apparatuses described in the following embodiments are preferably implemented by software, implementation by hardware or a combination of software and hardware is also possible and conceived. Fig. 9 is a structural block diagram (II) of an apparatus for processing a virtual machine component provided according to an embodiment of the present disclosure. As shown in Fig. 9, the apparatus for processing a virtual machine component in this embodiment includes:
a fist receiving module 402 configured for receiving a virtual machine component processing file sent by a host agent via a virtual serial port, wherein the virtual serial port is established by a virtual machine management HA module; and
a second receiving module 404 configured for receiving processing instruction information sent by the host agent via the virtual serial port, and processing the virtual machine component processing file according to the processing instruction information.

It should be further noted that other optional embodiments and technical effects of the apparatus for processing a virtual machine component in this embodiment all correspond to those of the method for processing a virtual machine component in Embodiment 2, so descriptions thereof are omitted here.

In one optional embodiment, the above-mentioned virtual machine component processing file includes at least one of the following:
a virtual machine component installation file, which is used for installing and deploying the virtual machine component in the virtual machine; and
a virtual machine component upgrade file, which is used for upgrading the virtual machine component in the virtual machine.

In one optional embodiment, in a case where the virtual machine component processing file contains the virtual machine component installation file, the operation of processing the virtual machine component processing file according to the processing instruction information includes:
running the virtual machine component installation file to install and deploy the virtual machine component;
in a case where the virtual machine component processing file contains the virtual machine component upgrade file, the operation of processing the virtual machine component processing file according to the processing instruction information includes:
   running the virtual machine component upgrade file to upgrade the virtual machine component.

In one optional embodiment, before the above-mentioned operation of receiving the virtual machine component processing file sent by the host agent via the virtual serial port, the apparatus further includes the following operation:
determining an occupied space of the virtual machine component processing file,
wherein in a case where the occupied space of the virtual machine component processing file is less than or equal to a preset threshold, the following operations are executed: receiving the virtual machine component processing file sent by the host agent via the virtual serial port, and receiving the processing instruction information sent by the host agent via the virtual serial port, so as to process the virtual machine component processing file according to the processing instruction information.

In one optional embodiment, the apparatus for processing a virtual machine component in this embodiment is further configured for:
in a case where there is no virtual optical disk drive in the virtual machine, executing the following operations: receiving the virtual machine component processing file sent by the host agent via the virtual serial port, and receiving the processing instruction information sent by the host agent via the virtual serial port, so as to process the virtual machine component processing file according to the processing instruction information; or,
in a case where there is a virtual optical disk drive in the virtual machine, executing the following operations: receiving the virtual machine component processing file sent by the HA module via the virtual optical disk drive, and receiving the processing instruction information sent by the host agent via the virtual serial port, so as to process the virtual machine component processing file according to the processing instruction information.

### Embodiment 5

An embodiment of the present disclosure further provides a computer-readable storage medium. The computer-readable storage medium stores a computer program. The computer program is configured for, when running, implementing the operations in any of the above method embodiments.

Optionally, in this embodiment, the above-mentioned computer-readable storage medium may be configured for storing a computer program used for executing the operations of the methods in the above embodiments:
Optionally, in this embodiment, the above-mentioned computer-readable storage medium may include, but not limited to: a USB flash disk, a ROM, a RAM, a mobile hard disk, a magnetic disk or an optical disk, and other various media capable of storing computer programs.

### Embodiment 6

An embodiment of the present disclosure further provides an electronic apparatus, including a memory and a processor. The memory stores a computer program. The processor is configured for executing the computer program to execute the operations in any of the above-mentioned method embodiments.

Optionally, the above-mentioned electronic device may further include a transmission device and an input/output device. The transmission device is connected to the above-mentioned processor, and the input/output device is connected to the above-mentioned processor.

Optionally, in this embodiment, the processor may be configured for executing the operations of the method in the above embodiment through the computer program.

Optionally, for specific examples in this embodiment, reference may be made to the examples described in the foregoing embodiments and optional implementations, and details are not described herein again in this embodiment.

Apparently, those skilled in the art should understood that the above-mentioned modules or operations of the present disclosure can all be implemented by a general-purpose computing apparatus, and they can be integrated on a single computing apparatus, or distributed on a network composed of multiple computing apparatuses. Optionally, they can be implemented using computing-apparatus-executable program codes such that they can be stored in a storage apparatus and executed by computing apparatuses. In some cases, the operations shown or described can be performed in an order different from that herein, or they are separately fabricated into individual integrated circuit modules, or multiple modules or operations in them are fabricated into single integrated circuit modules. In this way, the present disclosure is not limited to any particular hardware and software combinations.

The above descriptions are only preferred embodiments of the present disclosure, and are not intended to limit the present disclosure. Those skilled in the art can make various modifications and changes to the present disclosure. Any modification, equivalent replacement, improvement, etc. made within the principles of the present disclosure shall all fall within the protection scope of the present disclosure.

## Claims

1. A method for processing a virtual machine component, which is applied to a host agent, the method comprising:
sending a virtual machine component processing file to a virtual machine via a virtual serial port, wherein the virtual serial port is established by a virtual machine management Hyper Agent (HA) module; and
sending processing instruction information to the virtual machine via the virtual serial port, so as to instruct the virtual machine to process the virtual machine component processing file.

2. The method according to claim 1, wherein the virtual machine component processing file comprises at least one of:
a virtual machine component installation file, which is used for installing and deploying the virtual machine component in the virtual machine; and
a virtual machine component upgrade file, which is used for upgrading the virtual machine component in the virtual machine.

3. The method according to claim 2, wherein in a case where the virtual machine component processing file comprises the virtual machine component installation file, the processing instruction information is used for instructing the virtual machine to run the virtual machine component installation file, so as to install and deploy the virtual machine component in the virtual machine;
in a case where the virtual machine component processing file comprises the virtual machine component upgrade file, the processing instruction information is used for instructing the virtual machine to run the virtual machine component upgrade file, so as to upgrade the virtual machine component in the virtual machine.

4. The method according to any one of claims 1 to 3, wherein before sending the virtual machine component processing file to the virtual machine via the virtual serial port, the method further comprises:
acquiring a processing request sent by a user, wherein the processing request contains virtual machine component identification information, and the virtual machine component identification information is used for identifying the virtual machine component.

5. The method according to claim 4, wherein the request information further contains restart instruction information, wherein the restart instruction information is used for instructing the virtual machine to restart a virtual machine system after completing processing of the virtual machine component processing file.

6. The method according to claim 5, wherein the method further comprises:
detecting whether the virtual machine system is started normally, and detecting whether a virtual machine agent runs normally.

7. The method according to any one of claims 1 to 3, wherein before sending the virtual machine component processing file to the virtual machine via the virtual serial port, the method further comprises:
determining an occupied space of the virtual machine component processing file,
wherein in a case where the occupied space of the virtual machine component processing file is less than or equal to a preset threshold, following operations are executed: sending the virtual machine component processing file to the virtual machine via the virtual serial port, and sending the processing instruction information to the virtual machine via the virtual serial port.

8. The method according to any one of claims 1 to 3, wherein before sending the virtual machine component processing file to the virtual machine via the virtual serial port, the method further comprises:
detecting whether there is a virtual optical disk drive in the virtual machine,
wherein in a case where there is no virtual optical disk drive in the virtual machine, following operations are executed: sending the virtual machine component processing file to the virtual machine via the virtual serial port, and sending the processing instruction information to the virtual machine via the virtual serial port; or,
in a case where there is a virtual optical disk drive in the virtual machine, following operations are executed: sending the virtual machine component processing file to the virtual optical disk drive via the HA module, and sending the processing instruction information to the virtual machine via the virtual serial port.

9. A method for processing a virtual machine component, which is applied to a virtual machine, the method comprising:
receiving a virtual machine component processing file sent by a host agent via a virtual serial port, wherein the virtual serial port is established by a virtual machine management Hyper Agent (HA) module; and
receiving processing instruction information sent by the host agent via the virtual serial port, and processing the virtual machine component processing file according to the processing instruction information.

10. The method according to claim 9, wherein the virtual machine component processing file comprises at least one of:
a virtual machine component installation file, which is used for installing and deploying the virtual machine component in the virtual machine; and
a virtual machine component upgrade file, which is used for upgrading the virtual machine component in the virtual machine.

11. The method according to claim 10, wherein in a case where the virtual machine component processing file comprises the virtual machine component installation file, processing the virtual machine component processing file according to the processing instruction information comprises:
running the virtual machine component installation file, so as to install and deploy the virtual machine component;
in a case where the virtual machine component processing file comprises the virtual machine component upgrade file, processing the virtual machine component processing file according to the processing instruction information comprises:
running the virtual machine component upgrade file, so as to upgrade the virtual machine component.

12. The method according to any one of claims 9 to 12, wherein before receiving the virtual machine component processing file sent by the host agent via the virtual serial port, the method further comprises:
determining an occupied space of the virtual machine component processing file,
wherein in a case where the occupied space of the virtual machine component processing file is less than or equal to a preset threshold, following operations are executed: receiving the virtual machine component processing file sent by the host agent via the virtual serial port, and
receiving the processing instruction information sent by the host agent via the virtual serial port, so as to process the virtual machine component processing file according to the processing instruction information.

13. The method according to any one of claims 9 to 11, wherein the method further comprises:
in a case where there is no virtual optical disk drive in the virtual machine, following operations are executed: receiving the virtual machine component processing file sent by the host agent via the virtual serial port, and receiving the processing instruction information sent by the host agent via the virtual serial port, so as to process the virtual machine component processing file according to the processing instruction information; or
in a case where there is a virtual optical disk drive in the virtual machine, executing the following operations: receiving the virtual machine component processing file sent by the HA module via the virtual optical disk drive, and receiving the processing instruction information sent by the host agent via the virtual serial port, so as to process the virtual machine component processing file according to the processing instruction information.

14. An apparatus for processing a virtual machine component, which is applied to a host agent, the apparatus comprising:
a first sending module configured for sending a virtual machine component processing file to a virtual machine via a virtual serial port, wherein the virtual serial port is established by a virtual machine management HA module; and
a second sending module configured for sending processing instruction information to the virtual machine via the virtual serial port, so as to instruct the virtual machine to process the virtual machine component processing file.

15. An apparatus for processing a virtual machine component, which is applied to a virtual machine, the apparatus comprising:
a fist receiving module configured for receiving a virtual machine component processing file sent by a host agent via a virtual serial port, wherein the virtual serial port is established by a virtual machine management HA module; and
a second receiving module configured for receiving processing instruction information sent by the host agent via the virtual serial port, and processing the virtual machine component processing file according to the processing instruction information.

16. A computer-readable storage medium, the computer-readable storage medium storing a computer program, wherein the computer program is configured for, when running by a processor, implementing the methods according to any one of claims 1 to 8 and any one of claims 9 to 13.

17. An electronic apparatus, comprising a memory and processor, wherein the memory stores a computer program, and the processor is configured for running the computer program to implement the methods according to any one of claims 1 to 8 and any one of claims 9 to 13.
